(19) Europäisches Patentamt

European Patent Office

Office européen des brevets

(11) **EP 0 729 589 B1**

(12) **FASCICULE DE BREVET EUROPEEN**

(45) Date de publication et mention
de la délivrance du brevet:
**05.12.2001 Bulletin 2001/49**

(21) Numéro de dépôt: **95913200.2**

(22) Date de dépôt: **15.03.1995**

(51) Int Cl.$^7$: **G01S 13/02**, G01S 7/292

(86) Numéro de dépôt international:
**PCT/FR95/00314**

(87) Numéro de publication internationale:
**WO 95/27220 (12.10.1995 Gazette 1995/43)**

(54) **PROCEDE DE SONDAGE D'UN CANAL**

VERFAHREN ZUM ABTASTEN EINES KANALS

CHANNEL SOUNDING METHOD

(84) Etats contractants désignés:
**DE GB**

(30) Priorité: **31.03.1994 FR 9403808**

(43) Date de publication de la demande:
**04.09.1996 Bulletin 1996/36**

(73) Titulaire: **SOCIETE D'ETUDES THEMATIQUES ET
DES IDEES " SET ID"
75013 Paris (FR)**

(72) Inventeurs:
• **CARATORI, Julien
F-91600 Savigny-sur-Orge (FR)**
• **GOUTELARD, Claude
F-91220 Brétigny-sur-Orge (FR)**

(74) Mandataire: **Cabinet Martinet & Lapoux
BP 405
78055 Saint Quentin en Yvelines Cédex (FR)**

(56) Documents cités:
EP-A- 0 334 560       EP-A- 0 537 841
AU-B- 651 663         DE-A- 3 108 594
FR-A- 2 291 505       US-A- 4 644 356

**Description**

La présente invention concerne de manière générale un procédé de sondage d'un canal, tel que canal radioélectrique, ou canal acoustique.

Un tel procédé trouve application par exemple dans les techniques de sondage de l'ionosphère. L'ionosphère étant constituée de couches ionisées, elle se comporte comme un milieu dont la constante diélectrique varie en fonction de l'ionisation et du carré de la fréquence d'une onde reçue entraînant ainsi la réflexion de cette onde reçue.

L'homme du métier appréciera néanmoins que l'invention est également applicable au sondage de canaux filaires de transmission, à la détection de cibles dans des applications radar ou sonar, ou à la radiographie d'organes dans des applications médicales ou de structures dans des applications industrielles.

Un tel art antérieur se trouve dans le document DE 31 08 594 A, avec des caractéristiques techniques comme décrit dans le préambule de la revendication 1.

Toutes les applications précitées sont basées sur l'émission par un émetteur d'un signal qui est réfléchi ou transmis dans le canal, et reçu en un signal de bruit additionné à un signal de sondage caractérisant le milieu dans lequel s'est propagé le signal émis en ce qui concerne par exemple la présence de cibles, de couches ionisées,...etc. Le signal de sondage reçu par réflexion ou transmission possède des caractéristiques correlées aux caractéristiques du signal émis mais avec une amplitude très atténuée et donc trés faible. La très faible amplitude du signal de sondage reçu par réflexion ou transmission n'est pas gênante en soi puisqu'il suffit d'amplifier le signal reçu avant de l'analyser.

Toutefois une telle atténuation du signal de sondage reçu par réflexion ou transmission est toujours accompagnée d'un bruit de fond d'origine interne ou externe, tel que bruit atmosphérique. Cela implique que des erreurs peuvent résulter de l'analyse du signal reçu en confondant une pointe de bruit d'amplitude élevée avec le signal de sondage (fausse alarme) et inversement un signal de sondage reçu d'amplitude faible avec du bruit.

Toutes les solutions de la technique antérieure remédient partiellement à cet inconvénient en effectuant par exemple des calculs de corrélation entre le signal émis et le signal reçu ou en filtrant le signal reçu. Elles nécessitent toutes des émetteurs de signal de puissance très élevée, de l'ordre de plusieurs centaines de kilowatt, pour un sondage à 1000 km, et sont donc de réalisation très coûteuse.

L'invention fournit un procédé remédiant à l'inconvénient précité en ce qui concerne la puissance particulièrement élevée des émetteurs. Pour une portée prédéterminée, un émetteur nécessaire à la mise en oeuvre de l'invention offre une puissance environ de $10^3$ à $10^6$ fois moins élevée que celle des émetteurs de la technique antérieure.

A cette fin, un procédé de sondage d'un canal par émission de signaux et traitement de signaux de bruit et sondage reçus du canal en réponse aux signaux émis, comprenant les étapes cycliques suivantes :

- émission d'une impulsion brève dans le canal séparée d'une impulsion brève précédente par un intervalle de temps prédéterminé ,
- réception et acquisition d'une réponse impulsionnelle durant un intervalle de temps de durée égale à l'intervalle de temps prédéterminé succédant à l'émission d'impulsion brève, et
- échantillonnage de la réponse impulsionnelle en une suite de M échantillons initiaux qui sont définis par des rangs temporels et qui sont mémorisés dans une matrice d'échantillon initial,

est caractérisé en ce qu'il comprend, en outre, les étapes de:

- transformation par changement d'espace de M colonnes d'échantillon constituées chacune de N échantillons initiaux qui ont des rangs temporels respectifs égaux dans N dernières réponses impulsionnelles qui ont été successivement acquises et échantillonnées, en une matrice d'échantillon transformée,
- association à la matrice d'échantillon transformée d'une matrice binaire contenant des éléments binaires qui sont respectivement associés aux échantillons transformés dans la matrice d'échantillon transformée, et qui prennent chacun l'un de deux niveaux binaires en dépendance du résultat d'une comparaison d'un module dudit échantillon associé transformé par rapport à un seuil,
- filtrage spatial de la matrice binaire en une matrice binaire filtrée dans laquelle chaque élément binaire prend un état représentatif de la présence ou de l'absence du signal de sondage dans l'échantillon initial associé, et
- calcul d'une réponse impulsionnelle de canal exempte de bruit en fonction seulement des échantillons dans la matrice d'échantillon transformée qui sont respectivement associés à des éléments binaires de la matrice binaire filtrée ayant des niveaux qui sont représentatifs de la présence du signal de sondage.

L'étape de filtrage spatial consiste à transformer chacun des éléments binaires dans la matrice binaire en un élément binaire dans la matrice binaire filtrée en fonction d'éléments binaires contigus audit chacun des éléments binaires dans la matrice binaire.

De préférence, la transformation par changement d'espace est un filtrage par transformée de type Fourier et le calcul de la réponse impulsionnelle de canal consiste en une transformée de type Fourier inverse des échantillons initiaux d'une dernière réponse impulsionnelle acquise qui sont respectivement associés à des éléments binaires dans la matrice binaire filtrée ayant un état représentatif de la présence d'un signal de sondage. Selon l'invention, la transformation dite "de type Fourier" signifie toute transformation connue, qu'elle soit du type Fourier, Hadamard, Rademacher, etc..

Selon une variante de l'invention, le calcul de la réponse impulsionnelle de canal consiste en un calcul d'une réponse impulsionnelle efficace dont le module à un instant donné est égal à la valeur efficace des N échantillons initiaux qui sont définis par des rangs temporels d'échantillonnage égaux dans les N dernières réponses impulsionnelles acquises et échantillonnées, et qui sont associés à des éléments binaires dans la matrice binaire filtrée ayant un état représentatif de la présence d'un signal du sondage.

Le procédé selon l'invention est de préférence adaptatif. Pour cela, il est prévu une étape de détermination succédant à l'étape de filtrage spatial, pour déterminer la valeur du seuil pour une étape cyclique suivante d'association, en dépendance d'une probabilité de fausse alarme donnée calculée relativement aux échantillons initiaux qui sont respectivement associés à des éléments binaires dans la matrice binaire filtrée ayant un état représentatif de l'absence du signal de sondage.

Selon une caractéristique de l'invention, un procédé est caractérisé en ce que la valeur du seuil est déterminée à partir d'une fonction convexe qui est établie en fonction du seuil et des échantillons de la matrice d'échantillon transformée associés aux éléments binaires dans la matrice binaire filtrée ayant un état représentatif de l'absence du signal de sondage.

D'autres caractéristiques et avantages de la présente invention apparaîtront plus clairement à la lecture de la description suivante, en référence aux dessins annexés correspondants dans lesquels :

- les figures 1A, 1B, 1C et 1D sont des diagrammes illustrant respectivement des étapes d'émission d'impulsions successives, de réception de réponses impulsionnelles d'un canal sondé aux impulsions, d'échantillonnage de ces réponses impulsionnelles, et de mémorisation d'échantillons initiaux résultant de l'échantillonnage, pour la mise en oeuvre du procédé selon l'invention;
- la figure 2 est un diagramme montrant la séparation, dans une matrice d'échantillon transformée d'échantillon, entre des échantillons relatifs à du bruit et des échantillons relatifs à du bruit additionné à un signal de sondage;
- la figure 3 est un diagramme de moyenne de module en fonction de seuil de module utilisé pour séparer les échantillons relatifs à du bruit et les échantillons relatifs à du bruit additionné à un signal de sondage dans la matrice d'échantillon transformée;
- les figures 4A à 4D montrent des exemples de motif d'échantillons contigus pour filtrer spatialement des échantillons séparés;
- les figures 5A et 5B montrent respectivement une matrice d'échantillon transformée et une matrice d'échantillon séparée et filtrée;
- les figures 6A et 6B sont des diagrammes montrant des réponses impulsionnelles calculées sur la base respectivement d'échantillons initiaux et d'échantillons séparés et filtrés selon l'invention ; et
- la figure 7 est un algorithme d'étapes du procédé selon l'invention.

Dans la description qui suit, le terme "canal" est utilisé pour qualifier le milieu qui est sondé par onde électromagnétique, mécanique ou acoustique. La nature du "canal" n'est pas limitative : le canal peut être un canal filaire ou radioélectrique pour des applications de télécommunications ou de techniques radar ou sonar, ou bien un organe pour des applications médicales ou un produit pour des applications industrielles.

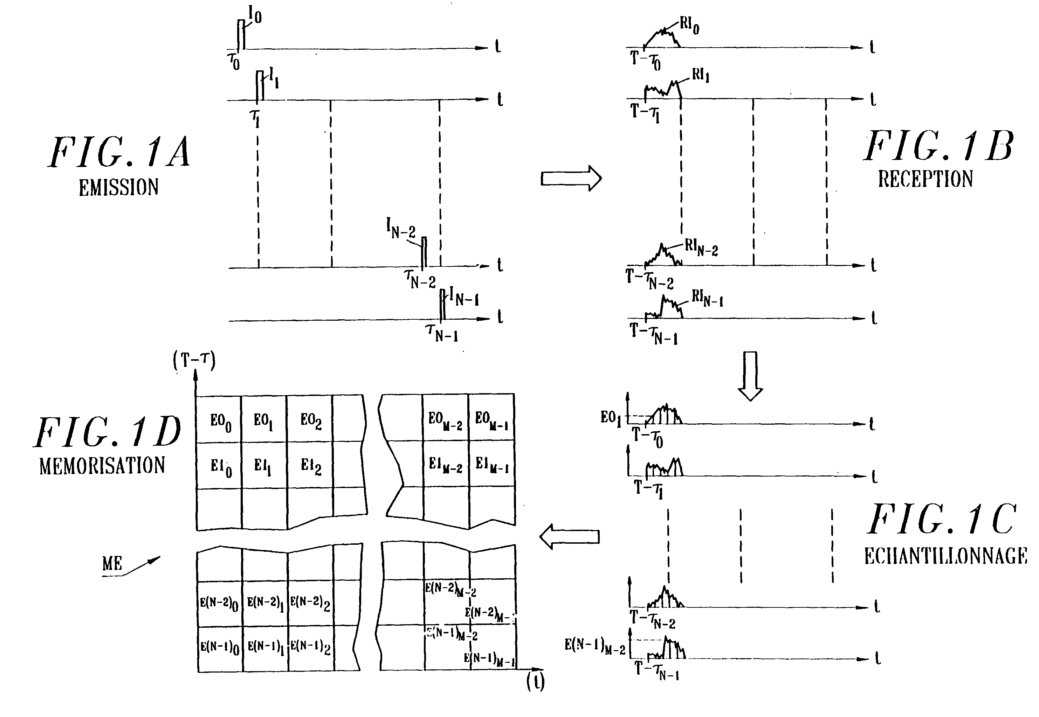

Les figures 1A à 1D schématisent les étapes essentielles d'obtention d'une matrice d'échantillon initiale ME montrée à la figure 1D sous la forme d'une mémoire qui mémorise des échantillons élémentaires résultant de l'échantillonnage de réponses impulsionnelles, ou signaux reçus au cours du temps t. La matrice d'échantillon initiale ME est obtenue de la manière suivante.

Un émetteur produit des impulsions brèves $I_O$ à $I_{N-1}$ successives séparées deux à deux par un intervalle de temps prédéterminé. Ces impulsions sont produites à des instants respectifs $\tau_O$ à $\tau_{N-1}$ et sont propagées en des ondes électromagnétiques dans le canal à sonder. En pratique, l'intervalle de temps séparant deux impulsions est directement fonction de la distance maximale de sondage. En réponse à ces impulsions brèves $I_O$ à $I_{N-1}$ émises par l'émetteur, sont reçus par réflexion ou transmission dans le canal des signaux respectifs, appelés réponses impulsionnelles de canal $RI_O$ à $RI_{N-1}$. Chacune de ces réponses impulsionnelles est prélevée entre l'instant d'émission de l'impulsion émise correspondante et l'instant d'émission de l'impulsion émise suivante, et donc durant l'intervalle de temps prédéterminé. Chaque réponse impulsionnelle $RI_n$, l'indice n étant compris entre 0 et l'entier (N-1), contient un signal de bruit mélangé éventuellement à un signal de sondage associé à l'impulsion émise correspondante $I_n$.

Chacune des N réponses impulsionnelles $RI_O$ à $RI_{N-1}$ est ensuite échantillonnée à une fréquence prédéterminée comme montré à la figure 1C. L'échantillonnage d'une réponse impulsionnelle $RI_n$ fournit M échantillons $En_O$ à $En_{M-1}$.

Comme montré à la figure 1D, les M échantillons de l'une $RI_n$ des N réponses impulsionnelles $RI_O$ à $RI_{N-1}$ sont mémorisés respectivement dans M cases-mémoire contiguës d'une matrice d'échantillon initiale ME. Les N ensembles d'échantillons respectifs des N dernières réponses impulsionnelles $RI_O$ à $RI_{N-1}$ sont stockés dans N lignes de cases-mémoire de la matrice d'échantillon initiale ME, et chacune de ces N lignes comprend M cases-mémoire. Le contenu de la matrice ME s'interprète de la manière suivante : chaque ligne est associée à une réponse impulsionnelle sous forme échantillonnée, et chaque colonne correspond à une distribution d'amplitude des échantillons ayant un même rang m, avec $0 \leq m \leq M$, respectivement dans les N réponses impulsionnelles $RI_O$ à $RI_{N-1}$.

Dans la description qui précède de l'obtention de la matrice d'échantillon initiale ME, n'est considéré que le résultat figé de la mémorisation de N réponses impulsionnelles échantillonnées. En pratique, les étapes d'émission, réception, échantillonnage et mémorisation sont continues. Cela signifie qu'une (N + 1)ième impulsion émise donne lieu à une (N + 1) ième réponse impulsionnelle qui est échantillonnée puis écrite dans la N^{ième} ligne de la matrice d'échantillon initiale ME. Les échantillons mémorisés dans la Nième ligne sont déplacés dans la (N - 1)ième ligne de la matrice. Simultanément, les échantillons contenus dans la (N-1)ième ligne sont eux-mêmes déplacés dans la (N - 2)ième ligne et ainsi de suite par récurrence jusqu'aux échantillons de la 2ième ligne qui sont déplacés dans la 1ère ligne. Les échantillons dans la première ligne sont pour leur part effacés pour chaque mémorisation d'une nouvelle réponse impulsionnelle échantillonnée. Le contenu de la matrice d'échantillonnage est donc modifié en permanence à la fréquence d'acquisition des réponses impulsionnelles. Cela est cohérent avec le but recherché pour un sondage de canal, canal qui ne présente pas des caractéristiques constantes dans le temps.

Le terme "impulsion" utilisé dans la description de la présente demande n'est pas limité à la notion physique restreinte qui lui est attribué dans le terme "impulsion de Dirac". Une telle impulsion peut consister par exemple en une séquence codée de "sous-impulsions" émise par l'émetteur, et utile aux techniques de compression d'impulsion. De telles techniques de compression d'impulsion visent à réduire la puissance crête de l'émetteur et augmenter le gain en puissance en étalant temporellement la durée de l'impulsion en une séquence codée de sous-impulsions présentant une énergie égale à celle de l'impulsion. Dans le récepteur sont prévus des moyens de corrélation pour corréler le signal reçu avec des répliques de la séquence déphasées temporellement, et ainsi comprimer le signal reçu en un signal proche de la réponse impulsionnelle qui aurait été reçue si une impulsion brève avait été émise. L'effet de la corrélation est de remettre en phase les raies du spectre de la séquence reçue par réflexion ou transmission dans le canal relativement à la phase de la réplique coïncidant avec la séquence reçue.

Par définition, chaque réponse impulsionnelle écrite sous forme échantillonnée dans une ligne de la matrice ME ne peut pas être associée à une variable aléatoire puisqu'elle dépend des caractéristiques du canal sondé. Par contre, chaque distribution d'amplitude des composantes réelle et imaginaire des échantillons d'un même rang m mémorisée dans une colonne respective de cette matrice ME est une fonction aléatoire de valeur moyenne et de variance finie définies par les échantillons de ce rang .

Il est démontré ci-dessous en termes mathématiques qu'une fonction aléatoire quelconque peut être rendue gaussienne.

Il est connu, en statistique, qu'une variable aléatoire X(t) qui est égale à la somme de P variables aléatoires indépendantes non gaussiennes $x_1(t)$ à $x_P(t)$, P étant un entier très grand, telle que:

$$X(t) = x_1(t) + x_2(t) + ....... + x_p(t) + .... + x_P(t)$$

est une variable aléatoire qui obéit à la loi normale ou loi de Gauss. Ce résultat est connu par le théorème de la limite centrale. La définition précédente peut être expliquée de la façon suivante : un évènement dû au hasard peut être considéré comme le résultat d'un grand nombre P de causes, indépendantes entr'elles, exerçant chacune une petite influence.

Chacune de ces causes est purement aléatoire mais l'évènement résultant de ces causes peut être apprécié par une loi de Gauss.

Si un changement d'espace par transformation, tel que transformée de Fourier discrète, est opéré sur les échantillons de la matrice ME selon l'opération :

$$E(v,t) = \sum_{\tau=0}^{N-1} E(\tau, t) . F(\tau, v)$$

où $E(\tau,t) = E\tau_t$ désigne un élément de la matrice ME, E(v,t) est un élément dans l'espace transformé et $F(\tau, v)$ est une fonction d'une famille de fonctions orthogonales définie par :

$$\sum_{\tau=0}^{N-1} F(\tau, v1) F(\tau, v2) = 0 \qquad\qquad \forall v1 \neq v2$$

alors chaque échantillon $E(v,t)$ est une variable aléatoire gaussienne.

En revenant à la figure 1D, il a été vu que chaque colonne correspond à une distribution d'amplitude des échantillons de même rang respectivement pour N réponses impulsionnelles successives $RI_O$ à $RI_{N-1}$. Par nature, une distribution d'amplitude pour une colonne donnée possède un caractère aléatoire. Grâce à une transformation par changement d'espace de $(\tau,t)$ à $(v,t)$ de chacune de ces distributions d'amplitudes initiales des échantillons de même rang, correspondant à une colonne de la matrice ME (figure 1D), un caractère gaussien sera conféré aux distributions d'amplitude des signaux issus d'une transformation des distributions d'amplitude initiales consécutives au changement d'espace.

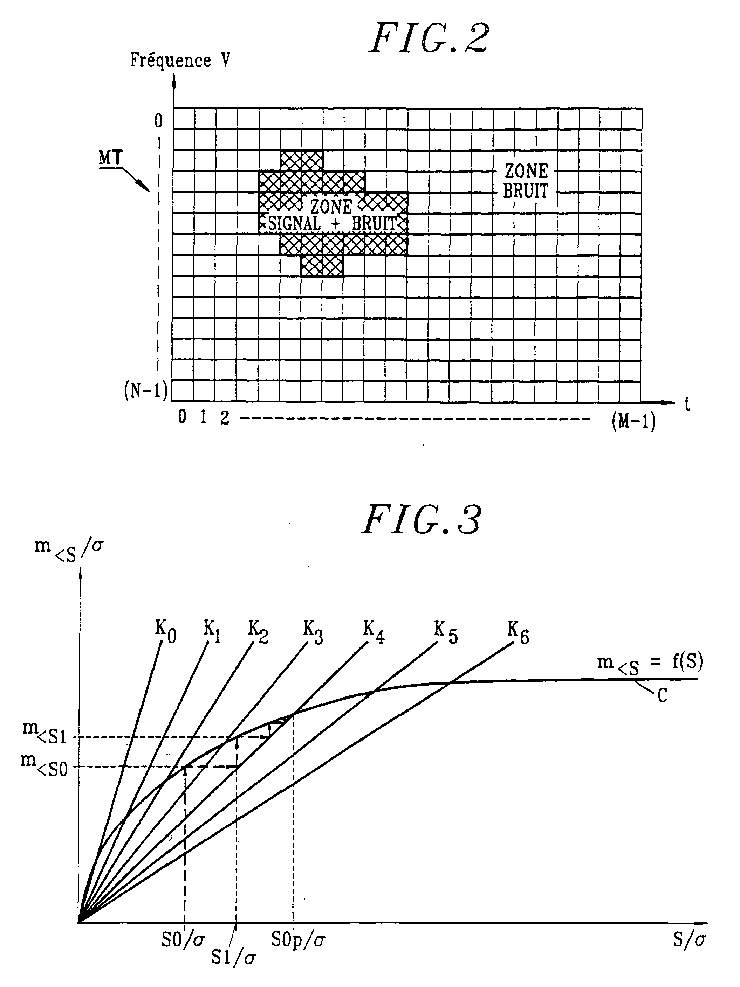

La figure 2 montre une matrice MT de modules des échantillons transformés résultant d'un changement d'espace "en colonne" des échantillons mémorisés dans la matrice ME montrée à la figure 1D. Selon ce qui précède, chaque colonne de cette matrice MT mémorise les modules des échantillons dont les composantes réelle et imaginaire présentent la caractéristique d'une distribution de Gauss. En pratique le changement d'espace peut consister en une transformation de Fourier, une transformation de Hadamard ou une transformation de Rademacher, etc. L'axe des ordonnées, relatif aux cases-mémoire prises suivant les colonnes dans la matrice d'échantillon transformée MT, est l'axe de fréquence qui se substitue à l'axe de temps $(T - \tau)$ dans la matrice ME de la figure 1D.

Il est rappelé que cette opération de changement d'espace a pour objectif de rendre Gaussien chacune des M distributions d'amplitude des composantes réelle et imaginaire des N échantillons respectivement dans les M colonnes. Indépendamment de ce changement d'espace, chaque échantillon d'une réponse impulsionnelle dans la mémoire à la figure 1D est porteur ou non d'un signal écho.

Chaque échantillon étant porteur d'un bruit mélangé ou non avec un signal de sondage, il est considéré ci-après des relations mathématiques établissant la présence d'un signal de sondage dans un bruit.

Il a été vu précédemment que le changement d'espace avait pour objectif de donner un caractère Gaussien à chacune des M distributions d'amplitude des composantes réelle et imaginaire de N échantillons, respectivement dans les M colonnes.

A titre d'exemple, soit $z(t) = b(t) + A.\cos(\omega_O t)$ la somme d'un signal de bruit $b(t)$ et d'un signal de sondage $A.\cos(\omega_O t)$, supposé ici être une composante sinusoïdale pure.

A des fins de simplification, $b(t)$ peut s'écrire

$$b(t) = x(t)\cos\omega_O t - y(t) \sin\omega_O t,$$

soit

$$z(t) = [x(t) + A] \cos\omega_O t - y(t) \sin\omega_O t .$$

En posant $x'(t) = x(t) + A$, la variable $MO(t)$ associée au module d'un échantillon est définie telle que :

$$MO(t)^2 = x'(t)^2 + y(t)^2,$$

soit

$$z(t) = MO(t) \cos (\omega_O t + \theta) ,$$

avec

$$\theta = \text{Arctg} (y(t)/x'(t)) = \text{Arctg} [y(t)/(x(t) + A)].$$

x'(t) et y(t) étant des variables indépendantes de type gaussienne, on peut écrire :

$$p(x',y)dx'dy = \frac{\exp - \left[\left[(x' - A)^2 + y^2\right]\right] / 2\sigma^2}{2\pi\sigma^2}dx'dy \qquad (3),$$

où $\sigma^2$ désigne la variance du signal de bruit b(t), et p(x',y) est la densité de probabilité pour le couple (x',y).

En passant aux coordonnées polaires, l'équation (3), avec x' = MO cosθ' et y = MO sin θ', s'écrit:

$$p(MO) = \int_0^{2\pi} \frac{MO}{\sigma^2} \cdot e^{\left(-1 / 2\sigma^2\right) \cdot (MO^2 + A^2 - 2A \cdot MO \cdot \cos\theta')} d\theta' ,$$

ou

$$p(MO) = \frac{MO}{\sigma^2} e^{-\left(MO^2 + A^2\right)/2\sigma^2} \cdot (1 / 2\pi)\int_0^{2\pi} e^{A \cdot MO \cos\theta'/\sigma^2} d\theta' ,$$

soit :

$$p(MO) = \frac{MO}{\sigma^2} e^{-\left(MO^2 + A^2\right)/2\sigma^2} \cdot I_O\left(\frac{MO \cdot A}{\sigma^2}\right) \qquad (4)$$

où $I_O$ désigne la fonction de Bessel modifiée de première espèce et d'ordre O.

Les résultats mathématiques indiqués ci-dessus établissent qu'en présence d'un signal de sondage reçu dans un échantillon de la matrice d'échantillon transformée MT, la densité de probabilité du module MO de cet échantillon est donnée par l'équation (4).

L'équation (4) signifie en outre qu'en l'absence d'un signal de sondage reçu dans un échantillon de la matrice MT, une densité de probabilité du module de cet échantillon est décrite par la loi de Raleigh donnée par la relation :

$$P(MO) = MO/\sigma^2 \exp\left(-\frac{M^2}{2\sigma^2}\right) \qquad (5)$$

Le principe de détection pour sondage utilisé dans l'invention consiste à effectuer, échantillon par échantillon, dans la matrice d'échantillon transformée MT de la figure 2, une comparaison entre le module de cet échantillon et un seuil S qui discrimine la présence et l'absence d'un signal de sondage dans cet échantillon, présence et absence respectivement définies en termes de densité de probabilité du module de l'échantillon par les équations (4) et (5).

Comme montré dans la figure 2, les échantillons dans la matrice d'échantillon transformée MT, qui sont obtenus par une transformation de changement d'espace d'une suite de réponses impulsionnelles $RI_O$ à $RI_{N-1}$ sont séparables en des premiers échantillons contenant un signal de sondage et des seconds échantillons dont le module ne contient aucune composante de signal de sondage. Ces premiers et seconds échantillons sont groupés dans des "zones" SIGNAL+BRUIT et BRUIT dans la figure 2.

La zone BRUIT, ne contenant que des échantillons de bruit, est caractérisée par une densité de probabilité définie par l'équation (5). Dans cette zone BRUIT, la probabilité $P_{MOa}$ qu'un échantillon ait un module MO compris entre $MO_a$ et $(MO_a + \Delta MO_a)$ est égale à :

$$P_{MO_a} = \int_{MO_a}^{MO_a + \Delta MO_a} (MO / \sigma^2) \cdot \exp\left(-\frac{MO^2}{2\sigma^2}\right) \cdot dMO \quad .$$

La distinction entre échantillons de la zone BRUIT et échantillons de la zone SIGNAL+BRUIT est opérée par comparaison entre le module de chaque échantillon et un seuil de module S. Si le module de l'échantillon est inférieur au seuil S, alors l'échantillon appartient à la zone BRUIT. Par contre, si le module de l'échantillon est supérieur au seuil S, l'échantillon appartient à la zone SIGNAL+BRUIT. Pour un seuil prédéterminé S, la zone BRUIT est définie par une probabilité de fausse alarme $P_{fa}$ égale à la probabilité pour que le module des échantillons de la zone BRUIT soit compris entre S et $+\infty$.

Il est donc obtenu, en utilisant l'équation (5):

$$P_{fa} = \int_{S}^{+\infty} (MO / \sigma^2) \cdot \exp\left(\frac{-MO^2}{2\sigma^2}\right) \cdot dMO$$
$$= \exp\left(-S^2 / 2\sigma^2\right).$$

Dans cette même zone BRUIT, la moyenne $m_{<S}$ des modules des échantillons dont le module est inférieur au seuil S s'écrit :

$$m_{<S} = \frac{\int_{O}^{S} MO^2 \cdot \exp\left(\frac{-MO^2}{2\sigma^2}\right) dMO}{\int_{O}^{S} MO \cdot \exp\left(\frac{-MO^2}{2\sigma^2}\right) dMO} \qquad (6)$$

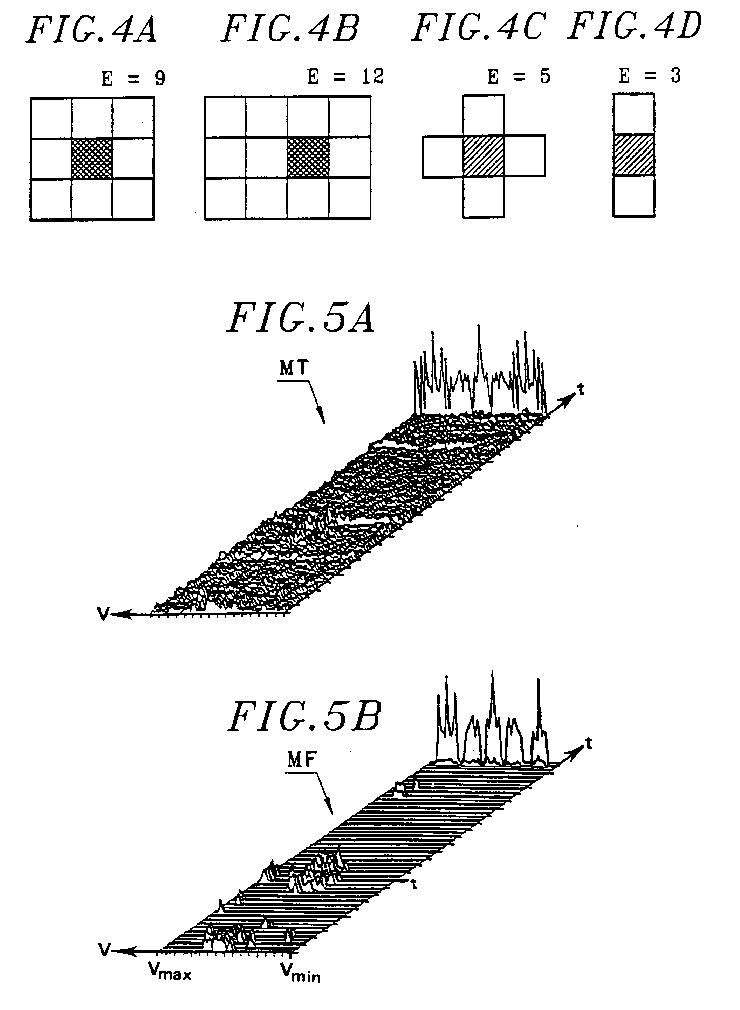

Dans la figure 3 est montré la fonction convexe C de la moyenne $m_{<S}$ en fonction du seuil S selon la relation (6). Un faisceau de droites défini par ($m_{<S} = K_i.S$), est également représenté dans la figure 3, $K_i$ prenant des valeurs discrètes prédéterminées.

Chacun des coefficients directeurs $K_i$ des droites du faisceau est représentatif d'une probabilité de fausse alarme $P_{fa}$. En effet, dans l'équation de droite ($m_{<S} = K_i.S$), le coefficient $K_i$ traduit le rapport qui existe entre la moyenne $m_{<S}$ des amplitudes des échantillons ayant une amplitude inférieure au seuil S et le seuil S. Si la moyenne $m_{<S}$ est très inférieure au seuil S, cela traduit le fait qu'il y a une très faible probabilité de fausse alarme $P_{fa}$ pour les échantillons concernés. Plus cette moyenne $m_{<S}$ se rapproche du seuil S, plus la probabilité de fausse alarme $P_{fa}$ augmente. Ainsi le coefficient $K_i$ d'une droite du faisceau est directement lié à la probalitité de fausse alarme.

La figure 3 assiste à une détermination graphique d'un seuil optimal, noté Sop. A partir d'un groupe d'échantillons donné de la matrice d'échantillon transformée MT, la moyenne $m_{<S}$ pour un seuil prédéterminé S est calculée préalablement. Si est fixée préalablement une probabilité de fausse alarme $P_{fa}$, qui, comme cela a été vu précédemment, est directement liée à une valeur de coefficient directeur de droite ($m_{<S} = K_i S$), cette valeur de coefficient $K_i$ permet alors de déterminer "graphiquement" la valeur optimale du seuil S, notée Sop. En effet il suffit alors de choisir initialement un seuil minimal très faible S=S0. Pour ce seuil minimal SO est calculée une moyenne correspondante $m_{<SO}$ par la relation (6). Cette moyenne conduit à la détermination d'un seuil S=S1 selon l'équation de droite associée à la probabilité de fausse alarme $P_{fa}$ fixée, laquelle droite associée correspond à $K_i = K_4$ selon l'exemple montré dans la figure 3. Ce seuil S1 détermine alors la valeur correspondante de la moyenne $m_{<S1}$ calculée pour le groupe d'échantillons donné. Ainsi par récurrence, comme montré par les segments de droite en trait discontinu disposés en marches d'escalier dans la figure 3, le seuil optimal Sop est déterminé pour une probabilité de fausse alarme $P_{fa}$ donnée et associée à une droite de coefficient directeur K$_i$. Cette résolution graphique pour la détermination d'un seuil optimal S=Sop en fonction d'une probabilité de fausse alarme donnée P$_{fa}$ est optimale eu égard aux moyens de calcul à mettre en oeuvre.

Le méthode graphique qui vient d'être décrite et qui fixe le seuil optimal Sop en fonction de la moyenne m$_{<S}$ des modules des échantillons dont le module est inférieur à un seuil, est l'une des méthodes utilisables. L'invention recouvre toutes les méthodes définissant une courbe f(S) établie à partir des échantillons de la matrice d'échantillon transformée MT et du seuil S et qui est une courbe convexe assurant la convergence du calcul adaptatif du seuil optimal Sop.

Grâce à ce seuil optimal Sop calculé, la zone BRUIT et la zone SIGNAL+BRUIT dans la matrice d'échantillon transformée MT sont séparées par comparaison du module de chaque échantillon de la matrice MT avec le seuil Sop. En pratique, cette séparation de zone est matérialisée par l'association à la matrice d'échantillon transformé MT d'une matrice binaire de même dimension. Chacun des éléments binaires dans la matrice binaire est associé à l'un respectif des échantillons dans la matrice d'échantillon transformée MT, et prend le niveau "1" si l'échantillon associé dans la matrice MT a un module supérieur au seuil Sop, et le niveau "0" si l'échantillon associé dans la matrice MT a un module inférieur au seuil Sop.

La séparation des zones BRUIT et SIGNAL+BRUIT, matérialisée dans la matrice d'élément binaire associée, ne s'effectue qu'à un facteur de probabilité de fausse alarme près. Cela signifie qu'il existe dans la matrice binaire associée des éléments binaires à un niveau "0", qui sont donc associés à des échantillons dans la matrice MT qui sont estimés être des échantillons de bruit, alors qu'ils correspondent à des échantillons de signal de sondage additionné à du bruit, et inversement des éléments binaires à un niveau "1", qui sont associés à des échantillons qui sont estimés être des échantillons de signal, alors qu'il correspondent en fait à des échantillons de bruit.

L'invention prévoit, pour remédier à ce problème, un filtrage spatial des éléments binaires de la matrice associée en une matrice binaire associée filtrée. Considérons pour cela un groupe de E éléments binaires contigus dans la matrice binaire associée. A titre d'exemple, les figures 4A à 4D montrent respectivement un groupe de E=3 x 3 éléments binaires circonscrits par un carré, un groupe de E = 3 x 4 éléments binaires circonscrits par un rectangle, un groupe de E=5 éléments binaires en croix, et un groupe de E=3 éléments binaires pris en ligne ou en colonne dans la matrice binaire associée.

Si le groupe de E éléments binaires est associé à E échantillons dans la matrice d'échantillon transformée MT appartenant à la zone BRUIT, la probabilité P$_B$(F) pour qu'un nombre F d'éléments binaires, avec F≤E, parmi ces E éléments binaires dans la matrice binaire associée aient un niveau égal à "1", ou, ce qui est équivalent, pour qu'un nombre F d'échantillons parmi les E échantillons associés aient un module supérieur au seuil S, s'écrit :

$$P_B(F) = C_E^F \cdot P_{fa}^{\ F} \cdot (1 - P_{fa})^{E-F} \tag{7}$$

où $C_E^F = \dfrac{E!}{F!(E-F)!}$ désigne le nombre de combinaisons de F éléments binaires parmi les E éléments binaires du groupe.

De même, si ce groupe de E éléments binaires est associé à un groupe de E échantillons appartenant à la zone SIGNAL + BRUIT, la probabilité P$_S$(F) pour qu'un nombre F d'échantillons, avec F≤E, parmi les E échantillons aient un module supérieur au seuil S s'écrit :

$$P_S\left(F\right) = \sum_{i=0}^{F} C_{p}^{\ i} Pd^{\ i}(1 - Pd)^{p-i} C_{E-p}^{\ F-i} Pfa^{\ F-i}(1 - Pfa)^{E-F+i} \tag{8}$$

où Pd dénote une probabilité de détection, $C_p^{\ i}$ désigne le nombre de combinaisons de i échantillons parmi p échantillons, et $C_{E-p}^{\ F-i}$ le nombre de combinaisons de (F - i) échantillons parmi (E - p) échantillons. L'équation (8) résulte du fait que dans la zone SIGNAL+BRUIT, un échantillon donné peut n'être porteur que de bruit ou porteur de signal et de bruit. En désignant par (E-p) le nombre d'échantillons du groupe porteurs uniquement de bruit, la probabilité que F échantillons parmi E aient un module supérieur à S résulte de la probabilité

$$\left( C_p^{\ i} Pd^i (1 - Pd)^{p-i} \right)$$

que i échantillons parmi les p échantillons des E échantillons porteurs de signal et de bruit aient un module supérieur

au seuil S, <u>ET</u> de la probabilité

$$\left( C\,^{F-i}_{E-p}\,Pfa^{F-i}(1\,-\,Pfa)^{E-F+i} \right)$$

que (F-i) échantillons parmi les (E-p) échantillons porteurs uniquement de bruit aient un module supérieur au seuil S.

Les relations précédentes (7) et (8) donnent les probabilités $P_S(F)$ et $P_B(F)$ qu'un nombre F d'échantillons parmi E échantillons contigus d'un groupe aient un module supérieur à S, respectivement dans la zone BRUIT et la zone SIGNAL + BRUIT. Ces relations permettent d'établir qu'un choix adéquat des valeurs E et F, par exemple E = 9 et F = 3, donnent à $P_B(F)$ une faible valeur et à $P_S(F)$ une valeur élevée.

Il est donc proposé selon l'invention d'opérer un filtrage spatial de la matrice binaire associée en une matrice binaire filtrée associée selon les deux étapes distinctes suivantes :

(a) Pour chaque groupe d'éléments binaires à E éléments binaires centré, comme montré par des hachures dans les figures 4A à 4D, sur l'un central respectif des éléments binaires de la matrice binaire associée, l'échantillon associé audit élément binaire central est considéré porteur de signal et bruit si et seulement si ledit élément binaire central a un niveau égal à "0" et si, dans le groupe d'éléments binaires, au moins F éléments ont un niveau égal à "1". Cette étape de filtrage spatial est cohérente avec la probabilité très faible prise par $P_B(F)$ dans la zone BRUIT; et

(b) pour chaque groupe d'éléments binaires à E éléments binaires centré sur l'un central respectif des éléments binaires de la matrice binaire associée, l'échantillon associé audit élément binaire central est considéré porteur de signal et bruit si et seulement si ledit élément binaire central a un niveau égal à "1" et si, dans ledit groupe, au moins (F-1) éléments binaires ont un niveau égal à "1". Cette étape de filtrage spatial est cohérente avec la probabilité relativement élevée prise par $P_S(F)$ dans la zone SIGNAL + BRUIT.

A l'issue de ces étapes de filtrage (a) et (b) est déduite une matrice binaire filtrée associée spatialement qui résulte de la matrice binaire associée dans laquelle les niveaux des éléments binaires prennent la valeur "1" si les échantillons respectifs associés sont estimés être porteurs de signal selon ces étapes de filtrage spatial, et la valeur "0" si les échantillons respectifs associés sont estimés n'être porteurs que de bruit toujours selon les étapes (a) et (b).
Les figures 5A et 5B montrent respectivement une matrice d'échantillon transformée MT résultant d'une transformation de changement d'espace de la matrice d'échantillon initiale ME, et en correspondance avec cette dernière matrice, une matrice d'échantillon filtrée MF résultant de la "suppression" de tous les échantillons dans la matrice MT associés respectivement à des éléments binaires de niveau "0" dans la matrice binaire associée filtrée. Dans cette dernière matrice MF, seuls sont donc conservés les échantillons appartenant à la zone SIGNAL+BRUIT, les modules des échantillons de BRUIT ayant été mis à zéro.

De la matrice d'échantillon filtrée MF est déduite la réponse impulsionnelle du canal sondé, représentative de cibles, couches ionisées, etc.. en dépendance de la nature de ce canal. Plus précisément sont déduites une réponse impulsionnelle efficace et/ou une réponse impulsionnelle instantanée.

En référence à la figure 5B, l'amplitude d'une réponse impulsionnelle efficace à un instant t, associée à un rang m d'échantillonnage, avec m compris entre 0 et (M-1), est égale à la valeur efficace des modules de N échantillons initiaux dans la matrice d'échantillon filtrée MF entre des bornes fréquentielles $v_{min}$ et vmax pour une transformation de type transformée de Fourier, lesdits N échantillons ayant des rangs d'échantillonnage égaux, c'est-à-dire coïncidant avec un décalage temporel égal par rapport aux instants d'émission des impulsions respectives.

Si H(t) désigne la réponse impulsionnelle efficace, sa valeur à un instant discret $t_i$ s'écrit :

$$H(t_i)\,=\,\left[ \sum_{V=Vmin}^{Vmax} MO^2(t_i,v) \right]^{1/2}\,/\,N$$

$MO(t_i,v)$ désignant le module d'un échantillon de coordonnées $(t_i,v)$ dans la matrice d'échantillon filtrée.
En référence à la figure 1D, la réponse impulsionnelle instantanée est obtenue de la manière suivante. Pour chaque dernière réponse impulsionnelle $RI_{N-1}$ acquise, celle-ci est échantillonnée puis mémorisée en les échantillons $E(N-1)_O$ à $E(N-1)_{M-1}$. Ces échantillons sont traités dans les étapes de transformation par changement d'espace et filtrage spatial selon l'invention par modification de la matrice d'échantillon initiale ME en la matrice d'échantillon filtrée MF, et par utilisation de matrices binaires intermédiaires associée et filtrée associée.

Selon l'exemple de l'invention, la transformation par changement d'espace consiste en la transformée de Fourier "en colonnes" des échantillons. La réponse impulsionnelle instantanée résulte alors de la transformée de Fourier inverse des échantillons $E(N-1)_O$ à $E(N-1)_{M-1}$ dans la matrice d'échantillon filtrée MF après leur traitement par changement d'espace et filtrage spatial. Ces échantillons filtrés sont alors expurgés de la quasi-totalité du bruit qui ne dégrade donc pas la réponse impulsionnelle instantanée.

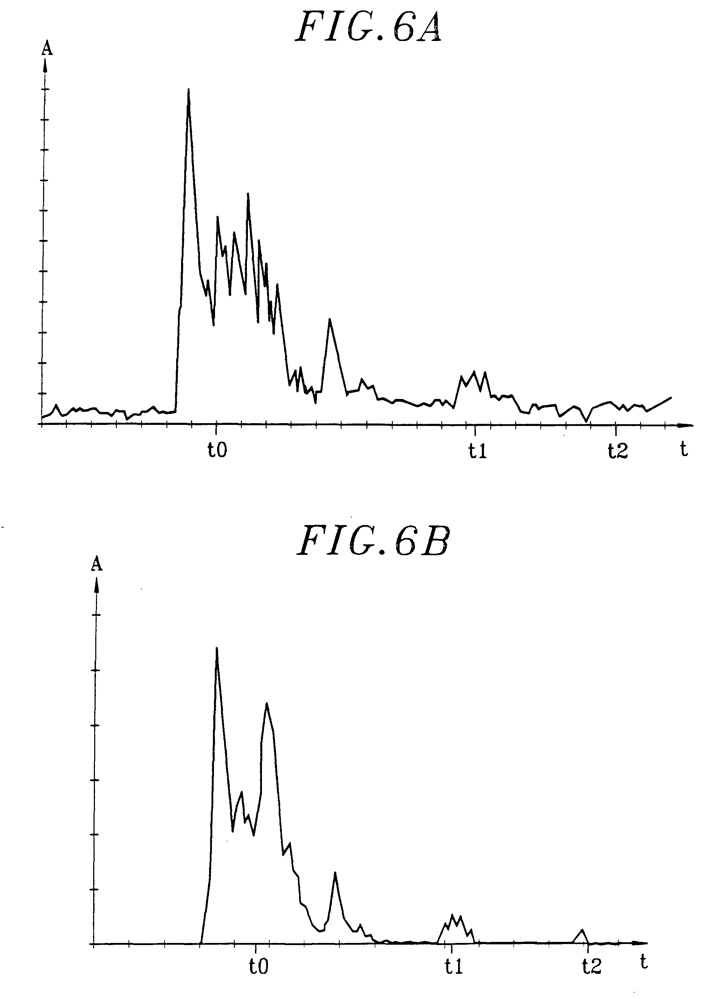

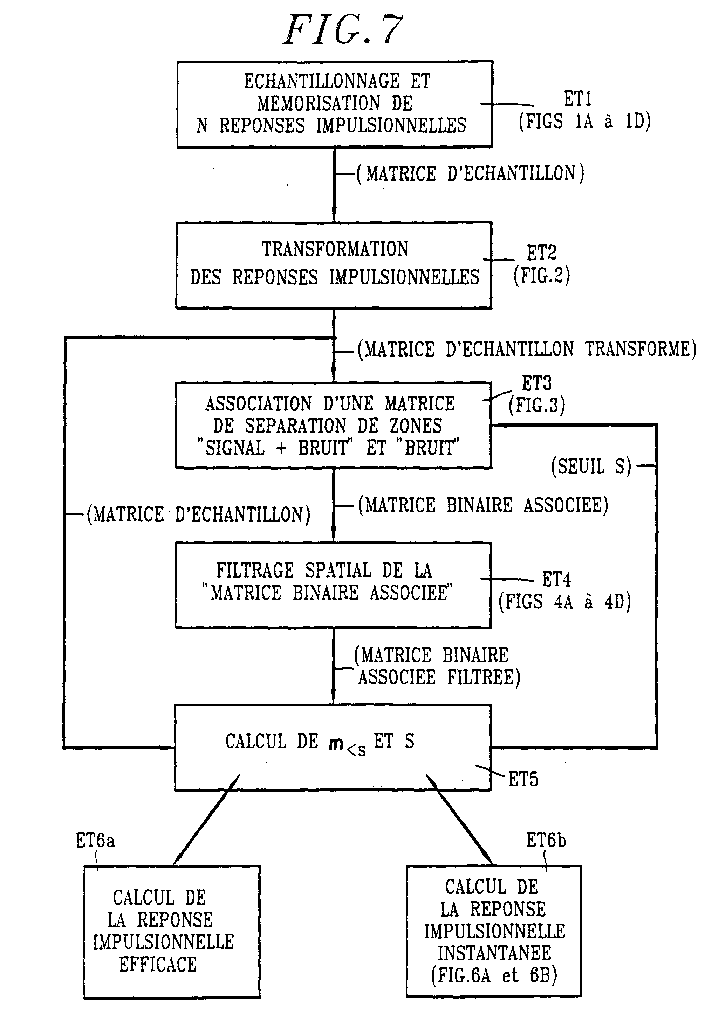

A titre d'exemple, les figures 6A et 6B montrent deux réponses impulsionnelles efficaces obtenues respectivement à partir d'échantillons initiaux dans la matrice d'échantillon initiale ME, et à partir d'échantillons correspondants dans la matrice d'échantillon filtrée MF résultant d'une transformation par changement d'espace et d'un filtrage spatial de la matrice ME selon l'invention. On notera que trois cibles sont détectées à des instants $t_O$, $t_1$ et $t_2$.

Sans les traitements selon l'invention, la réponse impulsionnelle (figure 6A) est mélangée à du bruit qui induit une confusion dans la détection de la cible située en $t_2$.

La figure 7 résume les étapes essentielles ET1 à ET6 de la mise en oeuvre du procédé selon l'invention. L'étape ET1 est relative à l'émission des impulsions successives $I_O$, $I_1$, ····· $I_{N-1}$, la réception et l'acquisition des réponses impulsionnelles respectives $RI_O$, $RI_1$, ... $RI_{N-1}$ renvoyées par le canal sondé en réponse à ces impulsions, à l'échantillonnage et à la mémorisation de ces réponses impulsionnelles comme montrées dans les figures 1A à 1D. A la seconde étape ET2, les réponses impulsionnelles échantillonnées, transcrites dans la matrice d'échantillon initiale ME, subissent une transformation de changement d'espace. Cette transformation est appliquée aux échantillons initiaux en "colonnes" respectifs des réponses impulsionnelles $RI_O$.....$RI_{N-1}$ résultant de l'échantillonnage à des instants présentant un même décalage temporel relativement aux impulsions émises correspondantes, c'est-à-dire aux M colonnes à N échantillons de même rang. Cette transformation, comme on l'a vu, présente la propriété de donner un caractère gaussien à chaque distribution des composantes réelle et imaginaire des échantillons ayant un même rang.

A cette matrice d'échantillon transformée MT ainsi obtenue par transformation par changement d'espace est associée une matrice binaire dans laquelle les éléments binaires sont respectivement associés aux échantillons de la matrice MT, et prennent un niveau "1" pour des échantillons respectifs associés de module supérieur à un seuil S, et un niveau "0" pour des échantillons respectifs associés de module inférieur à ce seuil S (étape ET3).

Afin de parfaire cette distinction entre échantillons porteurs uniquement de bruit et échantillons porteurs de bruit mélangé au signal de sondage, l'étape suivante consiste en le filtrage spatial des éléments binaires de la matrice associée, précédemment commenté en référence aux figures 4A à 4D. A l'issue de ce filtrage spatial est fournie une matrice binaire filtrée associée qui redéfinit la caractéristique de chaque échantillon dans la matrice d'échantillon ME en ce qu'il est porteur ou pas de signal.

Il peut donc être défini un nouveau seuil en fonction de la moyenne $m_{<S}$ des échantillons reconnus comme porteurs uniquement de bruit dans la matrice binaire filtrée associée (étape ET5). De cette matrice filtrée associée sont également déduites les réponses impulsionnelles efficace et instantanée pour chaque acquisition, échantillonnage et mémorisation d'une nouvelle réponse impulsionnelle, comme décrit précédemment.

Comme montré par la flèche reliant les deux blocs relatif à l'étape ET5 au bloc relatif à l'étape ET3, le procédé selon l'invention est adaptatif. Ce caractère adaptatif est inhérent au seuil S utilisé pour définir une matrice binaire associée relative à une première séparation des échantillons en ce qu'ils sont porteurs ou pas de bruit. Le seuil S est déduit de la matrice binaire filtrée associée, ou plus précisément de la moyenne $m_{<S}$ des modules des échantillons estimés porteurs uniquement de bruit, et donc associés à des éléments binaires de niveau "0" dans la matrice binaire filtrée associée. Ce seuil S significatif du caractère adaptatif du procédé est modifié pour chaque nouvelle acquisition d'une nouvelle réponse impulsionnelle et donc modification d'une "ligne" dans la matrice d'échantillon.

Selon le préambule de la description, l'un des objectifs principaux de l'invention consiste en une réduction considérable de la puissance nécessaire à un sondage de canal. L'invention procure alors l'avantage de réaliser plusieurs sondages simultanés à différentes fréquences d'émission, sans recourir à une puissance très élevée de l'émetteur compte tenu de la faible puissance nécessaire à chaque sondage selon l'invention. Cette simultanéité de sondages n'est pas concevable selon la technique antérieure au motif que la puissance nécessaire à chaque sondage est élevée. La mise en oeuvre du procédé dans de tels systèmes de sondage à fréquence variable, dits de sondage "flash", autorise une réduction de la durée de sondage d'un facteur Q égal au nombre Q de sondages simultanés à différentes fréquences respectives, ledit nombre Q étant limité par la puissance disponible de l'émetteur.

**Revendications**

1. Procédé de sondage d'un canal par émission de signaux et traitement de signaux de bruit et sondage reçus dudit canal en réponse auxdits signaux émis, comprenant les étapes cycliques suivantes :

- émission d'une impulsion brève ($I_1$....., $I_{N-1}$) dans ledit canal séparée d'une impulsion brève précédente ($I_O$,... $I_{N-2}$) par un intervalle de temps prédéterminé

$$\left(\tau_1 \ - \ \tau_0, \cdot \cdot \cdot, \tau_{n-1} \ - \ \tau_{n-2}\right),$$

- réception et acquisition d'une réponse impulsionnelle ($RI_1$,...$RI_{N-1}$) durant un intervalle de temps de durée égale audit intervalle de temps prédéterminé succédant à ladite émission d'impulsion brève ($I_O$, ... $I_{N-1}$),
- échantillonnage de ladite réponse impulsionnelle ($RI_O$,...$RI_{N-1}$) en une suite de M échantillons initiaux ($EO_O$ à $EO_{M-1}$,...$E(N-1)_O$ à $E(N-1)_{M-1}$) qui sont définis par des rangs temporels (0 à (M-1)), et qui sont mémorisés dans une matrice d'échantillon initial (ME), et
- transformation par changement d'espace (ET2) de M colonnes d'échantillon constituées chacune de N échantillons initiaux ($EO_O$ à $E(N-1)_O$,...$EO_{M-1}$ à $E(N-1)_{M-1}$) qui ont des rangs temporels respectifs égaux dans N dernières réponses impulsionnelles qui ont été successivement acquises et échantillonnées, en une matrice d'échantillon transformée (MT),

    **caractérisé en ce qu'**il comprend, en outre, les étapes de:

- association (ET3) à ladite matrice d'échantillon transformée (MT) d'une matrice binaire contenant des éléments binaires qui sont respectivement associés aux échantillons transformés dans ladite matrice d'échantillon transformée (MT), et qui prennent chacun l'un de deux niveaux binaires, "1", "0", en dépendance du résultat d'une comparaison d'un module dudit échantillon associé transformé par rapport à un seuil (S),
- filtrage spatial (ET4) de ladite matrice binaire en une matrice binaire filtrée dans laquelle chaque élément binaire prend un état représentatif de la présence ou de l'absence du signal de sondage dans l'échantillon initial associé, et
- calcul (ET6) d'une réponse impulsionnelle de canal sensiblement exempte de bruit en fonction seulement des échantillons dans la matrice d'échantillon transformée qui sont respectivement associés à des éléments binaires de la matrice binaire filtrée ayant des niveaux qui sont représentatifs de la présence du signal de sondage.

2. Procédé conforme à la revendication 1, **caractérisé en ce que** ladite étape de filtrage spatial (ET4) consiste à transformer chacun des éléments binaires dans ladite matrice binaire en un élément binaire dans ladite matrice binaire filtrée en fonction d'éléments binaires contigus audit chacun des éléments binaires dans la matrice binaire.

3. Procédé conforme à la revendication 1 ou 2, **caractérisé en ce que** ladite transformation par changement d'espace (ET2) est obtenue par transformée de type Fourier et **en ce que** le calcul de ladite réponse impulsionnelle de canal consiste en une transformée de type Fourier inverse des échantillons initiaux d'une dernière réponse impulsionnelle acquise qui sont respectivement associés à des éléments binaires dans la matrice binaire filtrée ayant un état représentatif de la présence du signal de sondage.

4. Procédé conforme à l'une quelconque des revendications 1 ou 2, **caractérisé en ce** le calcul de ladite réponse impulsionnelle de canal consiste en un calcul d'une réponse impulsionnelle efficace dont le module à un instant donné ($t_j$) est égal à la valeur efficace des modules (MO) de N échantillons initiaux qui sont définis par des rangs temporels d'échantillonnage (0 à M) égaux dans lesdites N dernières réponses impulsionnelles acquises et échantillonnées, et qui sont associés à des éléments binaires dans la matrice binaire filtrée ayant un état représentatif de la présence du signal de sondage.

5. Procédé conforme à l'une quelconque des revendications 1 à 4, **caractérisé par** une étape de détermination (ET5) succédant à ladite étape de filtrage spatial (ET4), pour déterminer la valeur dudit seuil (S) pour une étape cyclique suivante d'association, en dépendance d'une probabilité de fausse alarme donnée (Pfa) calculée relativement aux échantillons initiaux qui sont respectivement associés à des éléments binaires dans la matrice binaire filtrée ayant un état représentatif de l'absence du signal de sondage.

6. Procédé conforme à la revendication 5, **caractérisé en ce que** la valeur du seuil (S) est déterminée à partir d'une fonction convexe qui est établie en fonction dudit seuil et desdits échantillons de la matrice d'échantillon transformée (MT) associés auxdits éléments binaires dans la matrice binaire filtrée ayant un état représentatif de l'absence du signal de sondage.

**7.** Procédé de sondage d'un canal par émission de signaux et traitement de signaux de bruit et sondage reçus dudit canal en réponse auxdits signaux émis, **caractérisé par** une pluralité de sondages simultanés conformes à l'une quelconque des revendications précédentes, respectivement pour une pluralité de fréquences d'émission d'impulsions brèves.

**Patentansprüche**

**1.** Verfahren zur Untersuchung eines Kanals durch Senden von Signalen und Verarbeitung von Rausch- und Untersuchungssignalen, die von dem Signal in Reaktion auf die gesendeten Signale empfangen worden sind, umfassend die folgenden zyklischen Schritte:

- Senden eines kurzen Impulses ($I_1$ ....., $I_{N-1}$) in dem Kanal, getrennt von einem vorhergehenden kurzen Impuls ($I_0$, ... $I_{N-2}$) durch ein vorbestimmtes Zeitintervall ($\tau_1$ - $\tau_0$, ... , $\tau_{n-1}$ - $\tau_{n-2}$),
- Empfangen und Erfassen einer Impulsantwort ($RI_1$, ... $RI_{N-1}$) während eines Zeitintervalls mit Dauer gleich dem vorbestimmten Zeitintervall, das auf das Senden des kurzen Impulses ($I_0$, ... $I_{N-1}$) folgt,
- Abtasten der Impulsantwort ($RI_o$, ... $RI_{N-1}$) in einer Folge von M Anfangsabtastwerten ($EO_o$ bis $EO_{M-1}$, ... E(N-1)$_o$ bis E (N-1)$_{M-1}$), die durch Zeiträge (0 bis (M-1)) definiert sind, und die in einer Anfangsabtastwertmatrix (ME) gespeichert sind, und
- Transformation durch Raumänderung (ET2) von M Abtastwertspalten, bestehend jeweils aus N Anfangsabtastwerten ($EO_O$ bis E(N-1)$_O$, ... $EO_{M-1}$ bis E(N-1)$_{M-1}$), die entsprechende gleiche Zeiträge in N letzten Impulsantworten aufweisen, die aufeinanderfolgend erfaßt und abgetastet worden sind, in eine Transformationsabtastwertmatrix (MT),

  **dadurch gekennzeichnet, daß** es außerdem die Schritte umfaßt:

- Verknüpfen (ET3) einer binären Matrix mit der Transformationsabtastwertmatrix (MT), wobei die binäre Matrix binäre Elemente enthält, die entsprechend mit den transformierten Abtastwerten in der Transformationsabtastwertmatrix (MT) verknüpft sind, und die jeweils einen von zwei binären Pegeln, "1", "0", abhängig vom Ergebnis eines Vergleichs eines Moduls des verknüpften transformierten Abtastwertes in bezug auf einen Schwellwert (S) einnehmen,
- räumliche Filterung (ET4) der binären Matrix zu einer binären Filtermatrix, in der jedes binäre Element einen für das Vorhandensein oder das Fehlen des Untersuchungssignals im verknüpften Anfangsabtastwert repräsentativen Zustand einnimmt, und
- Berechnen (ET6) einer Kanalimpulsantwort im wesentlichen frei von Rauschen abhängig allein von den Abtastwerten in der Transformationsabtastwertmatrix, die jeweils mit binären Elementen der binären Filtermatrix verknüpft sind, die Pegel aufweisen, die für das Vorhandensein des Untersuchungssignals repräsentativ sind.

**2.** Verfahren nach Anspruch 1, **dadurch gekennzeichnet, daß** der Raumfilterungsschritt (ET4) daraus besteht, jedes der binären Elemente in der binären Matrix in ein binäres Element in der binären Filtermatrix zu transformieren abhängig von binären Elementen benachbart besagtem jedem der binären Elemente in der binären Matrix.

**3.** Verfahren nach Anspruch 1 oder 2, **dadurch gekennzeichnet, daß** die Transformation durch Raumänderung (ET2) durch Transformierte vom Fourier-Typ erhalten wird und daß die Berechnung der Kanalimpulsantwort aus einer Rücktransformierten vom Fourier-Typ der Anfangsabtastwerte einer letzten erfaßten Impulsantwort besteht, die jeweils mit binären Elementen in der binären Filtermatrix verknüpft worden sind, aufweisend einen Zustand repräsentativ für das Vorhandensein des Untersuchungssignals.

**4.** Verfahren nach einem beliebigen der Ansprüche 1 oder 2, **dadurch gekennzeichnet, daß** die Berechnung der Kanalimpulsantwort aus einer Berechnung einer effektiven Impulsantwort besteht, deren Modul zu einem gegebenen Zeitpunkt ($t_i$) gleich dem effektiven Wert der Module (MO) von N Anfangsabtastwerten ist, die durch gleiche Abtastzeiträge (0 bis M) in den besagten erfaßten und abgetasteten N letzten Impulsantworten definiert sind, und die mit binären Elementen in der binären Filtermatrix verknüpft sind, die einen für das Vorhandensein des Untersuchungssignals repräsentativen Zustand aufweisen.

**5.** Verfahren nach einem beliebigen der Ansprüche 1 bis 4, **gekennzeichnet durch** einen Bestimmungsschritt (ET5) folgend auf den Raumfilterungsschritt (ET4) zum Bestimmen des Werts des Schwellwerts (S) für einen folgenden zyklischen Verknüpfungsschritt abhängig von einer gegebenen Wahrscheinlichkeit für einen Fehlalarm (Pfa), die bezüglich der Anfangsabtastwerte berechnet worden ist, die entsprechend mit binären Elementen in der binären Filtermatrix verknüpft sind, die einen für das Fehlen des Untersuchungssignals repräsentativen Zustand aufweisen.

6. Verfahren nach Anspruch 5, **dadurch gekennzeichnet, daß** der Wert des Schwellwerts (S) ausgehend von einer konvexen Funktion bestimmt wird, die abhängig von dem Schwellwert und den Abtastwerten der Transformationsabtastwertmatrix (MT) erstellt wird, die mit den binären Elementen in der binären Filtermatrix verknüpft sind, die einen für das Fehlen des Untersuchungssignals repräsentativen Zustand aufweisen.

7. Untersuchungsverfahren für einen Kanal durch Senden von Signalen und Verarbeitung von Rausch- und Untersuchungssignalen, die von dem Kanal in Reaktion auf die gesendeten Signale empfangen worden sind, **gekennzeichnet durch** eine Anzahl von gleichzeitigen Untersuchungen gemäß einem beliebigen der vorhergehenden Ansprüche jeweils für eine Anzahl von Sendefrequenzen von kurzen Impulsen.

**Claims**

1. Method of sounding a channel by emitting signals and processing noise and sounding signals received from said channel in response to said emitted signals, comprising the following cyclic steps:

   - emitting a short pulse ($I_1$....., $I_{N-1}$) into said channel separated from a preceding short pulse ($I_O$,... $I_{N-2}$) by a predetermined time interval

$$\left(\tau_1 - \tau_0, ..., \tau_{n-1} - \tau_{n-2}\right),$$

   - receiving and acquiring an impulse response ($RI_1$,...$RI_{N-1}$) during a time interval equal to said predetermined time interval succeeding said step of emitting said short pulse ($I_O$,...$I_{N-1}$),
   - sampling said impulse response ($RI_O$,...$RI_{N-1}$) to produce a series of M initial samples ($EO_O$ to $EO_{M-1}$,...$E(N-1)_O$ to $E(N-1)_{M-1}$) which are defined by time ranks (O to (M-1)), and which are stored in an initial sample matrix (ME), and
   - change-of-space transforming (ET2) M sample columns each made up of N initial samples ($EO_O$ to $E(N-1)_O$,...$EO_{M-1}$ to $E(N-1)_{M-1}$) that have equal respective time ranks in N latest impulse responses that have been successively acquired and sampled to produce a transformed sample matrix (MT),

     **characterized in that** it further comprises the steps of :

   - associating (ET3) with said transformed sample matrix (MT) a binary matrix containing binary elements that are respectively associated with the transformed samples in said transformed sample matrix (MT), and that each take one of two binary states, "1", "0", depending on the result of comparing a modulus of said transformed associated sample to a threshold (S),
   - spatial filtering (ET4) of said binary matrix to produce a filtered binary matrix in which each binary element takes a state representative of the presence or the absence of the sounding signal in the associated initial sample, and
   - calculating (ET6) a channel impulse response substantially free of noise on the basis only of samples in the transformed sample matrix that are respectively associated with binary elements of the filtered binary matrix having states that are representative of the presence of the sounding signal.

2. Method according to claim 1, **characterized in that** said spatial filtering step (ET4) consists in converting each of the binary elements in said binary matrix into a binary element in said filtered binary matrix as a function of binary elements contiguous with said each of the binary elements in the binary matrix.

3. Method according to claim 1 or 2, **characterized in that** said space-of-change transforming step (ET2) is obtained by means of a Fourier transform type transformation and **in that** the step of calculating said channel impulse response consists in inverse Fourier transform type transformation of initial samples of a latest acquired impulse response that are respectively associated with binary elements in the filtered binary matrix having a state representative of the presence of the sounding signal.

4. Method according to any one of claims 1 or 2, **characterized in that** the step of calculating said channel impulse response consists in calculating a root mean square impulse response the modulus of which at a given time ($t_i$) is equal to the root mean square value of the moduli (MO) of N initial samples that are defined by equal sampling time ranks (0 to M) in said N latest impulse responses acquired and sampled, and that are associated with binary elements in the filtered binary matrix having a state representative of the presence of the sounding signal.

5. Method according to any one of claims 1 to 4, **characterized by** a determining step (ET5) following said spatial filtering step (ET4) for determining the value of said threshold (S) for a subsequent cyclic associating step conditioned by a given false alarm probability (Pfa) calculated relative to the initial samples that are respectively associated with binary elements in the filtered binary matrix having a state representative of the absence of the sounding signal.

6. Method according to claim 5, **characterized in that** the value of the threshold (S) is determined from a convex function that is derived as a function of said threshold and said samples of the transformed sample matrix (MT) associated with said binary elements in the filtered binary matrix having a state representative of the absence of the sounding signal.

7. Method of sounding a channel by emitting signals and processing noise and sounding signals received from said channel in response to said emitted signals, **characterized by** a plurality of simultaneous soundings according to any one of the preceding claims, respectively for a plurality of short pulse emission frequencies.

*FIG.1A*
EMISSION

$I_0$
$\tau_0$

$I_1$
$\tau_1$

$I_{N-2}$
$\tau_{N-2}$

$I_{N-1}$
$\tau_{N-1}$

t

*FIG.1B*
RECEPTION

$RI_0$
$T-\tau_0$

$RI_1$
$T-\tau_1$

$RI_{N-2}$
$T-\tau_{N-2}$

$RI_{N-1}$
$T-\tau_{N-1}$

t

*FIG.1C*
ECHANTILLONNAGE

$EO_1$
$T-\tau_0$

$T-\tau_1$

$T-\tau_{N-2}$

$E(N-1)_{M-2}$
$T-\tau_{N-1}$

t

*FIG.1D*
MEMORISATION

$(T-\tau)$

| $EO_0$ | $EO_1$ | $EO_2$ | | | $EO_{M-2}$ | $EO_{M-1}$ |
| $EI_0$ | $EI_1$ | $EI_2$ | | | $EI_{M-2}$ | $EI_{M-1}$ |

ME

| $E(N-2)_0$ | $E(N-2)_1$ | $E(N-2)_2$ | | | $E(N-2)_{M-2}$ $E(N-2)_{M-1}$ |
| $E(N-1)_0$ | $E(N-1)_1$ | $E(N-1)_2$ | | | $E(N-1)_{M-2}$ $E(N-1)_{M-1}$ |

$(t)$

EP 0 729 589 B1

## FIG.2

Fréquence V

0

MT

ZONE
SIGNAL + BRUIT

ZONE
BRUIT

(N-1)

0 1 2 — — — — — — — — — — — — — — — — — — — (M-1)

t

## FIG.3

$m_{<S}/\sigma$

$K_0$  $K_1$  $K_2$  $K_3$  $K_4$  $K_5$  $K_6$

$m_{<S} = f(S)$

C

$m_{<S1}$

$m_{<S0}$

$S0/\sigma$  $S1/\sigma$  $S0p/\sigma$

$S/\sigma$

# FIG.4A

E = 9

# FIG.4B

E = 12

# FIG.4C

E = 5

# FIG.4D

E = 3

# FIG.5A

MT

t

V

# FIG.5B

MF

t

t

V

$V_{max}$    $V_{min}$

## FIG.6A

## FIG.6B

# *FIG.7*

```
┌─────────────────────────┐
│    ECHANTILLONNAGE ET    │        ET1
│     MEMORISATION DE      │   (FIGS 1A à 1D)
│  N REPONSES IMPULSIONNELLES │
└─────────────────────────┘
```

—(MATRICE D'ECHANTILLON)

```
┌─────────────────────────┐
│      TRANSFORMATION      │        ET2
│  DES REPONSES IMPULSIONNELLES │   (FIG.2)
└─────────────────────────┘
```

—(MATRICE D'ECHANTILLON TRANSFORME)

```
┌─────────────────────────┐
│  ASSOCIATION D'UNE MATRICE │    ET3
│  DE SEPARATION DE ZONES   │   (FIG.3)
│  "SIGNAL + BRUIT" ET "BRUIT" │
└─────────────────────────┘
```

(SEUIL S)—

—(MATRICE D'ECHANTILLON)     —(MATRICE BINAIRE ASSOCIEE)

```
┌─────────────────────────┐
│    FILTRAGE SPATIAL DE LA │    ET4
│  "MATRICE BINAIRE ASSOCIEE" │  (FIGS 4A à 4D)
└─────────────────────────┘
```

(MATRICE BINAIRE
ASSOCIEE FILTREE)

```
┌─────────────────────────┐
│   CALCUL DE m<s ET S     │
│                          │  ET5
└─────────────────────────┘
```

ET6a                                      ET6b

```
┌──────────────┐              ┌──────────────┐
│  CALCUL DE    │              │  CALCUL DE    │
│  LA REPONSE   │              │  LA REPONSE   │
│  IMPULSIONNELLE │            │  IMPULSIONNELLE │
│  EFFICACE     │              │  INSTANTANEE  │
│               │              │  (FIG.6A et 6B) │
└──────────────┘              └──────────────┘
```